# EUROPÄISCHE PATENTSCHRIFT

(11) **EP 2 591 954 B1**
(45) Veröffentlichungstag und Bekanntmachung des Hinweises auf die Patenterteilung: **06.01.2016**
(21) Anmeldenummer: 12185437.6
(22) Anmeldetag: 21.09.2012
(51) Int. Cl.: B60R 21/207, B60N 2/58

(54) **Sitz für Kraftfahrzeuge**
Seat for motor vehicles
Siège pour véhicules automobiles

(30) Priorität: 08.11.2011 DE 102011117835
(43) Veröffentlichungstag der Anmeldung: 15.05.2013
(73) Patentinhaber: Magna Seating (Germany) GmbH, 63877 Sailauf (DE)
(72) Erfinder: Haas, Michael, 97783 Karsbach (DE)
(74) Vertreter: Völger, Silke Beatrix

(56) Entgegenhaltungen:
- WO-A1-99/15375
- WO-A1-99/21738
- DE-A1- 19 848 905
- DE-A1-102007 054 162
- DE-A1-102009 044 759
- US-A- 5 678 853
- US-A- 5 927 749
- US-A1- 2007 145 727
- US-A1- 2010 140 905

## Beschreibung

Die vorliegende Erfindung betrifft einen Sitz für Kraftfahrzeuge.

Die Anforderungen an die passive und aktive Sicherheit eines Kraftfahrzeuges steigen stetig. Es ist mittlerweile üblich eine Vielzahl von Airbageinrichtungen im Kraftfahrzeug vorzusehen. Neben den Fahrer- und Beifahrerairbags werden unter anderem auch Seitenairbags verbaut.

Diese sollen bei einem Seitencrash den Fahrer bzw. Beifahrer zusätzlich vor größeren Verletzungen schützen und sind häufig in einem Seitenbereich eines Fahrzeugsitzes angeordnet. Ein im Fahrzeugsitz bzw. dem Seitenbereich des Fahrzeugsitzes angeordneter Airbag entfaltet sich dabei durch eine sogenannte Reißnaht die im Sitzbezug ausgeführt ist. Problematisch bei einer derartigen Ausführung ist allerdings, dass das Aufreißen d.h. die Aufreißgeschwindigkeit und auch die Optik des Bezuges des Fahrzeugsitzes und der Reißnaht abhängig vom Bezugsmaterial, des Nahtmaterials und der Art der Nähte abhängt. Wie bereits erläutert, müssen aus Sicherheitsaspekten das Öffnen der Reißnaht und das Entfalten der Airbageinrichtung vorhersehbar sein. Eine Unabhängigkeit vom verwendeten Bezug soll ebenfalls sichergestellt werden. Um dies zu erzielen werden die Sitzbezüge mit sogenannten Entfaltungs-/Positionierhilfen aus einem weniger dehnbarem Material ausgestattet.

Die Druckschrift US 2007/0145727 A1 offenbart eine Seitenairbag Vorrichtung, bei der Verstärkungsmateriallagen vorgesehen sind, die einerseits mit ersten Randbereichen im Bereich der Aufreißnaht angebunden sind und an ihren gegenüberliegenden Endbereichen ebenfalls festgelegt sind. Der Endbereich der ersten Verstärkungslage (front low extension member) ist dabei über Fixierungsmittel an der Rückenlehne befestigt. Der Endbereich der zweiten Verstärkungslage ist mit dem Sitzrahmen befestigt.

Aus der US 2010/140905 A1 ist eine Seitenairbag Vorrichtung bekannt, bei der Verstärkungsmateriallagen vorgesehen sind. Diese Verstärkungsmateriallagen sind einerseits mit ersten Randbereichen im Bereich der Aufreißnaht angebunden und an ihren gegenüberliegenden Endbereichen ebenfalls festgelegt. Der Endbereich der vorderen Lage des seitlichen Bezugs mit erster Verstärkungslage ist dabei über Fixierungsmittel an der Rückenlehne befestigt. Der Endbereich der seitlichen Lage des Seitenbezugs mit zweiter Verstärkungslage ist über eine Naht an die hintere Lage angebunden.

Die DE 198 48 905 A1 D3 offenbart einen Sitz mit Seitenairbag, bei dem gering dehnbare Spanngewebe an der Innenseite des Sitzbezugs vorgesehen und mit der Nahtlinie (Sollbruchstelle) vernäht sind. Die Enden der vorgenannten Spanngewebe sind jeweils separat fixiert. Das Ende des ersten Spanngewebes ist dabei an dem Rückenlehnen Rahmen festgelegt, das Ende des zweiten Spanngewebes ist an einem Sitzaufhängungsabschnitt fixiert.

Weiterhin sind aus der WO 99/15375 A1 und der WO 99/21738 A1 Seitenairbag Vorrichtungen bekannt, bei der Verstärkungsmateriallagen vorgesehen sind. Diese Verstärkungsmateriallagen sind mit ersten Randbereichen im Bereich der Aufreißnaht angebunden und an ihren gegenüberliegenden Endbereichen über ineinandergreifende Halteleisten zu einer den Airbag umschließenden sackförmigen Fixierung verbunden.

Der vorliegenden Erfindung liegt die Aufgabe zugrunde, einen Sitz mit einer in einem Aufnahmeraum des Seitenbereichs angeordneten Airbageinrichtung derart weiterzubilden, dass eine einfache und kostengünstige Fertigung der Vorrichtung und Montage der Bauteile möglich ist, wobei ein funktionssicheres, vorhersehbares Aufreißen der Reißnaht bei unterschiedlichen Sitzbezugsmaterialien sichergestellt ist.

Diese Aufgabe löst die vorliegende Erfindung durch die im Patentanspruch 1 angegebenen Merkmale.

Durch diese erfindungsgemäße Ausgestaltung sind die Verstärkungsmateriallagen an ihrem der Nahtlinie gegenüberliegenden Randbereich über Fixierungsmittel an der Rückenlehne befestigt und bilden eine das Seitenwangenpolster mit Airbag umgreifende geschlossene sackförmige Fixierung. Durch die Verwendung der gleichen Fixierungsmittel zur Befestigung der Verstärkungsmateriallagen an den der Aufreißnaht gegenüberliegenden Randbereichen ist eine einfache und kostengünstige Fertigung der Bauteile möglich.

Bei Kraftfahrzeugsitzen wird der das Polster überspannende Sitzbezug über Stoff-Fahnen, Drahtbügel oder andere geeignete Mittel in eine Anzahl von Vertiefungen eines Polsters gezogen. Derartige Abspannvorrichtungen sind bekannt und umfassen vorteilhafterweise im Polstereingeschäumte Abspanndrähte, die zur Festlegung der vorgenannten Stoff-Fahnen, Drahtbügel oder anderer Befestigungsmittel dient. Die Verstärkungsmateriallagen können erfindungsgemäß einfach, kostengünstig und schnell an einem dem ersten Randbereich gegenüberliegenden zweiten Randbereich über eine Anzahl von Fixierungsmitteln, die mit der Polsterung zusammenhängen oder verbunden sind, an der Rückenlehne befestigt werden. Hierbei können insbesondere die für die Bezugsabspannung dienenden Abspanndrähte genutzt werden. Somit entfällt die Anordnung von separaten Fixierungsmitteln für die Festlegung der zweiten Randbereiche der Verstärkungsmateriallage.

Weitere vorteilhafte Ausgestaltungen und Weiterbildungen des erfindungsgemäßen Sitzes für Kraftfahrzeuge ergeben sich aus den jeweiligen Unteransprüchen.

Eine bevorzugte Ausführungsform der vorliegenden Erfindung wird nachfolgend beispielshalber beschrieben, wobei veranschaulichend auf die beigefügten Zeichnungen Bezug genommen wird.

Darin zeigen:
- Fig. 1: eine perspektivische Ansicht eines Fahrzeugsitzes,
- Fig. 2: die Verstärkungsmateriallage mit Fixierungsmittel,
- Fig. 3: in schematischer Ansicht die Einzelteile des Bezugs im Bereich der Gassackeinrichtung mit Verstärkungsmateriallage und die Nahtstellen,
- Fig. 4: eine perspektivische Ansicht des Seitenbereichs eines Fahrzeugsitzes mit integrierter Gassackeinrichtung; und
- Fig. 5: einen Schnitt durch den in Fig. 4 dargestellten Seitenbereich.

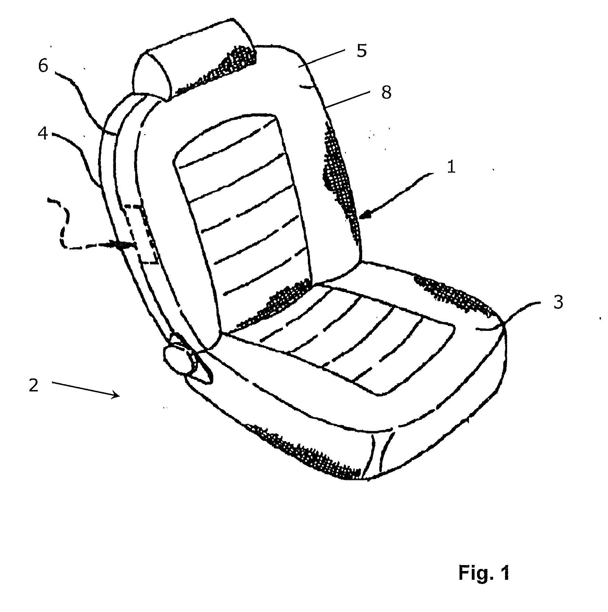

Fig. 1 zeigt in perspektivischer Ansicht einen Sitz 1 für Kraftfahrzeuge, der im Wesentlichen aus einer Sitzstruktur 2 mit Sitzpolster 3 und einer beweglich daran angebundenen Rückenlehne 4 mit Rückenlehnenpolster 5 besteht. Sitzpolster 3 und Rückenlehnenpolster 5 sind mit einem Polsterbezug 6 umhüllt, der unterschiedliche Materialien aufweisen kann. Üblich sind beispielsweise Materialien aus einem textilen Gebilde oder Leder, dabei sind Materialabschnitte zum Bilden der Umhüllung vernäht. Zusätzlich sind auch Ziernähte vorgesehen, die dem Benutzer eine ansprechende Optik vermitteln sollen.

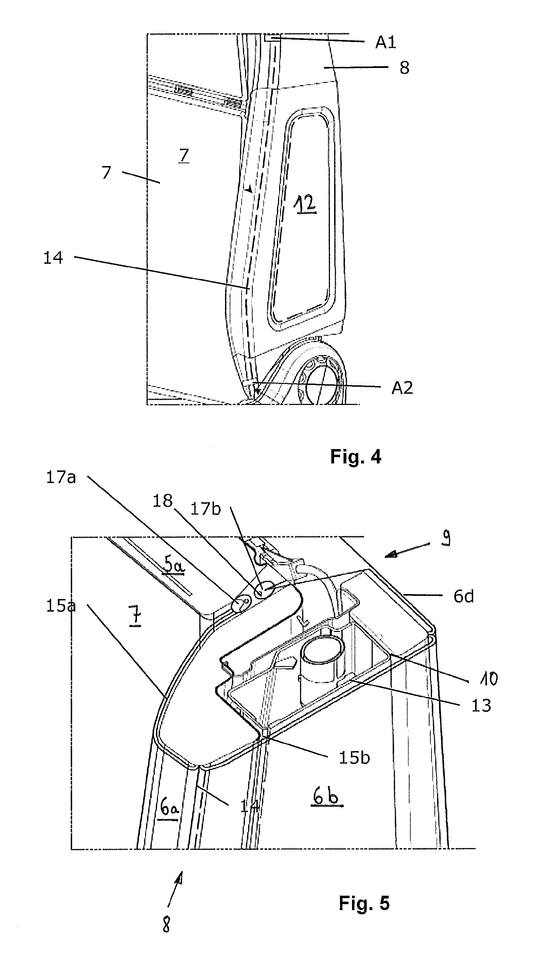

Die Rückenlehne 4 des dargestellten Fahrzeugsitzes 1 umfasst dabei einen mittleren Rückenlehnenbereich 7 zum Stützen des Rücken des Benutzers, sowie seitlich angeordnete Seitenwangenbereiche 8 auf. Die Schnittdarstellung der Figur 5 zeigt, dass das Rückenlehnenpolster 5 unterteilt ist in ein mittleres Rückenlehnenpolster 5a, sowie die Seitenwangen umgebende Posterelemente 5b. Die Polsterelemente sind dabei aus einem Schaummaterial beispielsweise PU Schaum hergestellt. Sowohl der das mittlere Rückenlehnenpolster aufweisende mittlere Rückenlehnenbereich 7, als auch die die Polsterelemente aufweisenden Seitenwangen 8 und die Rückseite 9 der Rückenlehne 4 sind mit einem Polsterbezug 6 umhüllt. Der Seitenwangenbezug wird dabei aus zwei Materialabschnitten 6a, 6b gebildet, die nachfolgend als vorderer Seitenwangenbezugsabschnitt 6a, und hinterer Seitenwangenbezugsabschnitt 6b bezeichnet werden. Durch Vernähung der Bezugsabschnitte 6a, 6b der Seitenwangenbezugsabschnitte sowie durch Vernähung des vorderen Seitenwangenbezugsabschnitts 6a mit einem mittleren Rückenlehnenbezugsabschnitt 6c und durch Vernähung des hinteren Seitenwangenbezugsabschnitts 6b mit einem hinteren Rückenlehnenbezugsabschnitt 6d werden Nähte gebildet.

Wie es aus der Darstellung der Figur 5 zu ersehen ist, ist in der Polsterung im Bereich der Seitenwange 8 ein zu einer äußeren Seitenfläche der Rückenlehne 4 offener Aufnahmeraum 10 gebildet. In dem Aufnahmeraum 10 ist eine Gassackeinrichtung 11 angeordnet, um beim Auslösen einen Gassack in einen seitlich neben dem Insassen liegenden Bereich hinein zu entfalten. Gassackeinrichtungen 11 sind hinreichend bekannt und werden an dieser Stelle nicht in Einzelheiten beschrieben. Im Wesentlichen bestehen diese aus einem Gehäuse, einem Gasgenerator und einem Gassack. Das Gassackgehäuse 12 umfasst Seitenwände, eine Rückwand sowie eine Abdeckung 13, die eine u-förmige Perforation aufweist und bei Entfaltung des Gassackes bricht und um eine Scharnierachse nach Außen aufschwenkt. Das Gassackgehäuse 12 ist üblicherweise aus einem Kunststoffmaterial hergestellt.

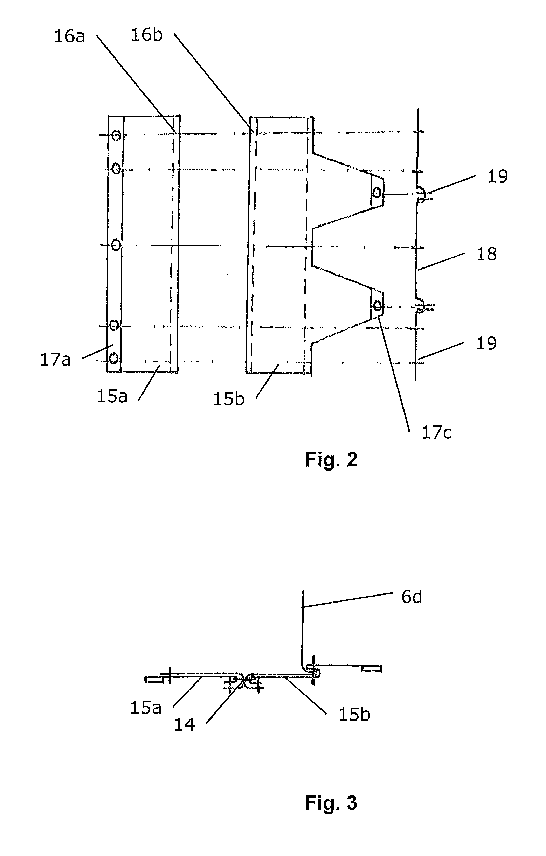

Wie es aus der Darstellung der Figuren 3 und 5 ersichtlich ist, umfasst der Rückenlehnenbezug einen vorderen Seitenwangenbezugsabschnitt 6a und einen hinteren Seitenwangenbezugsabschnitt 6b, die miteinander über eine vertikal verlaufende Naht verbunden sind. In einem Teilbereich dieser Naht wird die Reißnaht 14 gebildet. Der Anfang sowie das Ende der Reißnaht 14 sind in der Fig. 4 durch die Bezugszeichen A1 und A2 gekennzeichnet. Bei einer Entfaltung der Gassackeinrichtung und Aufschwenken der Gassackgehäuseabdeckung reißt die Reißnaht entsprechend auf. An der Aufreißnaht 14 ist beidseitig jeweils eine zwischen Polsterung und Bezugsabschnitten 6a, 6b liegende flächige Verstärkungsmateriallage 15a, 15b mit jeweils einem ersten Randbereich angehängt. Die Verstärkungsmateriallage leitet die zum Aufreißen erforderlichen Kräfte in die Aufreißnaht 14 ein und bildet die in der Beschreibungseinleitung genannte Kraftkaschierung. Die Verstärkungsmateriallage 15a, 15b ist dabei aus einem Material, welches eine geringere Dehnung und eine höhere Reißfestigkeit als der Bezug aufweist.

Die Verstärkungsmateriallagen 15a, 15b sind an ihrem dem ersten Randbereich gegenüberliegenden Randbereich 17a, 17b über eine Anzahl von Fixierungsmitteln 18 an der Rückenlehne befestigt. Die Fixierungsmittel 18 sind vorzugsweise ganz oder teilweise in die Polsterung eingebettet. In der dargestellten Ausführungsform der Erfindung sind diese Fixierungsmittel 18 Drähte, die zur Bezugsabspannung in der Polsterung eingebettet sind (Abspanndrähte).

Die Figur 2 zeigt die Verstärkungsmateriallagen 15a, 15b sowie das Fixierungsmittel 18 im Detail. Hierbei sind die Verstärkungsmateriallagen im nicht vernähten Zustand gezeigt. Die an der Aufreißnaht im vernähten Zustand angeordneten ersten Randbereiche der Verstärkungsmateriallagen liegen mit ihren Außenkanten beabstandet zueinander. Die Nahtstellen sind in unterbrochener Linie eingezeichnet. Die Verstärkungsmateriallage 15a ist im Wesentlichen als rechteckiges Materialstück ausgeführt. Der dem ersten Randbereich gegenüberliegende zweite Randbereich 17a ist mit einer Halteleiste (Retainer) verbunden. In die Halteleiste sind beabstandet Ösen eingebracht. Die Verstärkungsmateriallage 15b weist ein rechteckiges Materialstück und zwei spitz zulaufende Einhängelaschen aus. Die Randbereiche der Einhängelaschen bilden dabei den zweiten Randbereich. Randseitig sind ebenfalls Halteleisten (Retainer) mit jeweils einer Öse ausgeführt. Auf der rechten Zeichnungsseite ist das als Polsterdraht ausgebildete Fixierungsmittel gezeigt.

Das Fixierungsmittel weist hierbei gerade verlaufende Abschnitte sowie dazwischen liegende Abschnitte mit herausstehenden Ösen auf. Aus der Darstellung kann man ersehen, dass die Abschnitte mit Ösen den Halteleisten der spitz zulaufenden Einhängelaschen der Verstärkungsmateriallage 15b gegenüberliegend angeordnet sind. Im verbauten Zustand werden die Einhängelaschen über starre Zugmittel 19, beispielsweise Ringe mit den Abschnitten mit Ösen verbunden. Die Halteleiste der Verstärkungsmateriallage 15a wird ebenfalls über starre Zugmittel 19 mit den geraden Abschnitten des Fixierungsmittels verbunden. Hierdurch wird, wie man es aus der Darstellung der Figur 5 ersehen kann ein das Seitenwangenpolster mit eingebauter Gassackeinrichtung umgreifendes geschlossene sackförmige Fixierung erzielt.

Fig. 3 zeigt die flächig aufeinander liegende und vernähte Anordnung der Seitenwangenbezugsabschnitte 6a, 6b mit den Verstärkungsmateriallagen 15a, 15b sowie die Nahtstelle zwischen hinterem Seitenwangenbezugsabschnitt mit einem hinteren Rückenlehnenbezugsabschnitt 6d. Die Halteleisten der Verstärkungsmateriallagen sind in der Darstellung noch nicht mit dem Fixierungsmittel verbunden.

## Patentansprüche

1. Sitz für Kraftfahrzeuge, dessen Rückenlehne (4) eine Tragstruktur, eine daran angeordnete Polsterung (5) und einen darüber angeordneten Bezug (6) umfasst, wobei
- die Polsterung (5) einen Aufnahmeraum (10) ausspart,
- in dem Aufnahmeraum (10) eine Gassackeinrichtung (11) angeordnet ist, um beim Auslösen einen Gassack in einen seitlich neben dem Insassen liegenden Bereich hinein zu entfalten,
- der Bezug (5) eine für den Austritt des Gassacks eingerichtete Aufreißnaht (14) aufweist,
- an der Aufreißnaht (14) beidseitig jeweils eine zwischen Polsterung und Bezug liegende flächige Verstärkungsmateriallage (15a, 15b) mit einem jeweiligen ersten Randbereich (16a, 16b) angehängt ist, um die zum Aufreißen erforderlichen Kräfte in die Aufreißnaht (14) einzuleiten,
- und die beiden Verstärkungsmateriallagen (15a, 15b) an einem dem jeweiligen ersten Randbereich (16a, 16b) gegenüberliegenden jeweiligen zweiten Randbereich (17a, 17c) über eine Anzahl von Fixierungsmitteln (18) derart verbunden sind, dass eine den Airbag umschließende sackförmige Fixierung gebildet wird, **dadurch gekennzeichnet, dass** der Aufnahmeraum (10) zu einer äußeren Seitenfläche der Rückenlehne (4) hin offen ausgebildet ist, die Fixierungsmittel (18) an der Rückenlehne (4) befestigt und mit der Polsterung (5) zusammenhängen oder verbunden sind, und wobei die Fixierungsmittel (18) einen Draht mit mehreren geraden Abschnitten und dazwischen liegenden herausstehenden Ösen umfasst, und wobei der zweite Randbereich (17a) der ersten Verstärkungsmateriallage (15a) mit einer Halteleiste verbunden ist, in die beabstandet Ösen eingebracht sind und, wobei der zweite Rand der zweiten Verstärkungsmateriallage (15b) gezackt ist und dadurch eine Anzahl vorzugsweise spitz zulaufender Einhängelaschen (17c) ausbildet, und wobei die Halteleiste der ersten Verstärkungsmateriallage 15a über starre Zugmittel (19) mit den geraden Abschnitten des Fixierungsmittels (18) verbunden ist und die Einhängelaschen (17c) über starre Zugmittel (19) mit den Abschnitten mit Ösen des Fixierungsmittels verbunden sind.

2. Sitz nach Anspruch 1, wobei die Fixierungsmittel (18) ganz oder teilweise in die Polsterung (5) eingebettet sind.

3. Sitz nach Anspruch 1, wobei die Ränder beider Verstärkungsmateriallagen ineinandergreifend gezackt ausgebildet sind.

## Claims

1. Seat for motor vehicles, the back rest (4) of which seat comprises a supporting structure, a padding (5) arranged thereon and a cover (6) arranged over the latter, wherein
- the padding (5) leaves a receiving space (10) free,
- an airbag device (11) is arranged in the receiving space (10) in order, in the event of triggering, to deploy an airbag into a region located laterally next to the occupant,
- the cover (5) has a tear seam (14) which is designed for the exit of the airbag,
- a respective planar reinforcing material layer (15a, 15b) which is located between padding and cover is attached by a respective first edge region (16a, 16b) to the tear seam (14) on both sides in order to introduce the forces, which are required for the tearing-open, into the tearing seam (14),
- and the two reinforcing material layers (15a, 15b) are connected at a respective second edge region (17a, 17c), which is situated opposite the respective first edge region (16a, 16b), via a number of fixing means (18) in such a manner that a bag-shaped fixation enclosing the bag is formed, **characterized in that** the receiving space (10) is designed so as to be open towards an outer side surface of the back rest (4), the fixing means (18) are fastened to the back rest (4) and are joined together with or are connected to the padding (5), and wherein the fixing means (18) comprise a wire with a plurality of straight sections and protruding eyelets located in between, and wherein the second edge region (17a) of the first reinforcing material layer (15a) is connected to a holding strip into which eyelets are introduced in a spaced-apart manner, and wherein the second edge of the second reinforcing material layer (15b) is serrated and thereby forms a number of preferably tapering attachment tabs (17c), and wherein the holding strip of the first reinforcing material layer (15a) is connected to the straight sections of the fixing means (18) via rigid tension means (19), and the attachment tabs (17c) are connected to the sections with eyelets of the fixing means via rigid tension means (19).

2. Seat according to Claim 1, wherein the fixing means (18) are entirely or partially embedded in the padding (5).

3. Seat according to Claim 1, wherein the edges of the two reinforcing material layers are designed so as to intermesh in a serrated manner.

## Revendications

1. Siège pour véhicules automobiles, dont le dossier (4) comprend une structure porteuse, un rembourrage (5) disposé sur celle-ci et un revêtement (6) disposé sur celui-ci,
- le rembourrage (5) ménageant un espace de réception (10),
- un dispositif de coussin de gaz (11) étant disposé dans l'espace de réception (10) afin de déployer lors de son déclenchement un coussin de gaz à l'intérieur d'une région située latéralement à côté de l'occupant,
- le revêtement (5) présentant une couture déchirable (14) prévue pour la sortie du coussin de gaz,
- une couche de matériau de renforcement plane (15a, 15b) située à chaque fois de chaque côté au niveau de la couture déchirable (14) entre le rembourrage et le revêtement étant accrochée par une première région de bord respective (16a, 16b) afin d'introduire dans la couture déchirable (14) les forces nécessaires à la déchirure,
- et les deux couches de matériau de renforcement (15a, 15b) étant connectées à une deuxième région de bord respective (17a, 17c) opposée à la première région de bord respective (16a, 16b) par le biais d'une pluralité de moyens de fixation (18), de telle sorte qu'une fixation en forme de sac entourant l'airbag soit formée,
**caractérisé en ce que** l'espace de réception (10) est réalisé sous forme ouverte vers une surface latérale extérieure du dossier (4), les moyens de fixation (18) sont fixés au dossier (4) et sont rattachés ou connectés au rembourrage (5), les moyens de fixation (18) comprenant un fil avec plusieurs sections droites et des oeillets intermédiaires saillants vers l'extérieur, et la deuxième région de bord (17a) de la première couche de matériau de renforcement (15a) étant connectée à une baguette de retenue dans laquelle sont réalisés des oeillets espacés et le deuxième bord de la deuxième couche de matériau de renforcement (15b) étant dentelé et constituant ainsi une pluralité de pattes d'accrochage (17c) se terminant de préférence en pointe, la baguette de retenue de la première couche de matériau de renforcement (15a) étant connectée par le biais de moyens de traction rigides (19) aux sections droites du moyen de fixation (18) et les pattes d'accrochage (17c) étant connectées par le biais de moyens de traction rigides (19) aux sections munies d'oeillets du moyen de fixation.

2. Siège selon la revendication 1, dans lequel les moyens de fixation (18) sont incorporés complètement ou partiellement dans le rembourrage (5).

3. Siège selon la revendication 1, dans lequel les bords des deux couches de matériau de renforcement sont réalisés de manière dentelée en s'engageant l'un dans l'autre.
